# EUROPEAN PATENT APPLICATION

(11) **EP 4 644 985 A1**
(43) Date of publication of application: **05.11.2025**
(21) Application number: 25171602.3
(22) Date of filing: 22.04.2025
(51) Int. Cl.: G02F 1/1343, G02F 1/1347, G02F 1/137

(54) **DISPLAY DEVICE**

(30) Priority: 23.04.2024 US 202463637564 P; 14.04.2025 TW 114114050
(71) Applicant: Iris Optronics Co., Ltd., Tainan City 711010 (TW)
(72) Inventor: LIAO, Chi Chang, 700022 Tainan City (TW); LIN, Ching Shan, 804057 Kaohsiung City (TW); LIN, Hui Che, 710056 Tainan City (TW); CHOU, Jung Chih, 712008 Tainan City (TW)
(74) Representative: Studio Torta S.p.A.

(57) **Abstract**

A display device includes at least one liquid crystal module. The at least one liquid crystal module includes a lower substrate, a lower electrode layer, a pixel layer, an upper electrode layer, and an upper substrate. The lower substrate has an upper surface and a lower surface opposite to each other. The lower electrode layer is connected to the upper surface of the lower substrate. The pixel layer is connected to the lower electrode layer. The upper electrode layer is connected to the pixel layer. The upper substrate is connected to the upper electrode layer. The lower electrode layer is made of a low-reflectivity material of a dark color, the lower electrode layer absorbs a light from outside of the upper substrate, and prevents an interface reflection of the light between the lower electrode layer and the lower substrate.

## Description

### BACKGROUND

### Technical Field

The present disclosure relates to a display device. More particularly, the present disclosure relates to a display device with great dark-state performance and optical contrast.

### Description of Related Art

The cholesteric liquid crystal display device is a display device that utilizes cholesteric liquid crystals to reflect external light to display images. Electric fields of varying strength and frequency are applied to the cholesteric liquid crystal display device to change the state of the cholesteric liquid crystals, so as to alter the content displayed on the display device. Therefore, the conventional cholesteric liquid crystal display device includes a substrate, a lower electrode layer, a liquid crystal layer and an upper electrode layer stacked in sequence. An electric field is applied to the liquid crystal layer by the lower electrode layer and the upper electrode layer, so as to adjust the state of the cholesteric liquid crystals in the liquid crystal layer.

However, during the display of the conventional cholesteric liquid crystal display device, external light, which is not reflected by the liquid crystal layer, will become unintended reflected light at the interface between the lower electrode layer and the substrate after passing through the liquid crystal layer. The content displayed on the cholesteric liquid crystal display device will be interfered, resulting in poor dark-state performance and optical contrast of the cholesteric liquid crystal display device.

In this regard, how to reduce the negative impact of reflected light on the display performance of the cholesteric liquid crystal display device, has become a goal for the relevant industries.

### SUMMARY

According to an embodiment of the present disclosure, a display device includes at least one liquid crystal module. The at least one liquid crystal module includes a lower substrate, a lower electrode layer, a pixel layer, an upper electrode layer, and an upper substrate. The lower substrate has an upper surface and a lower surface opposite to each other. The lower electrode layer is connected to the upper surface of the lower substrate. The pixel layer is connected to the lower electrode layer, so as to make the lower electrode layer be disposed between the pixel layer and the lower substrate. The upper electrode layer is connected to the pixel layer, so as to make the pixel layer be disposed between the lower electrode layer and the upper electrode layer. The upper substrate is connected to the upper electrode layer, so as to make the upper electrode layer be disposed between the pixel layer and the upper substrate. The lower electrode layer is made of a low-reflectivity material of a dark color, the lower electrode layer absorbs a light from outside of the upper substrate, and prevents an interface reflection of the light between the lower electrode layer and the lower substrate.

According to the aforementioned display device, wherein the low-reflectivity material includes at least one of a dark copper oxide and a dark molybdenum oxide.

According to the aforementioned display device, wherein a resistance of the lower electrode layer is 0.1 ohm to 0.5 ohm.

According to the aforementioned display device, wherein a reflectivity of the lower electrode layer is 0% to 30%.

According to the aforementioned display device, wherein the at least one liquid crystal module further includes a colored optical adhesive layer connected to the lower surface of the lower substrate, so as to make the lower substrate be disposed between the lower electrode layer and the colored optical adhesive layer.

According to the aforementioned display device, wherein the at least one liquid crystal module further includes a lower alignment layer and an upper alignment layer. The lower alignment layer is disposed between the lower electrode layer and the pixel layer, and the upper alignment layer is disposed between the pixel layer and the upper electrode layer.

According to the aforementioned display device, wherein the pixel layer is a cholesteric liquid crystal layer.

According to the aforementioned display device, further including a plurality of wiring layers electrically connected to the lower electrode layer, wherein the plurality of wiring layers are made of the same material as the lower electrode layer.

According to another embodiment of the present disclosure, a display device includes a first liquid crystal module, a second liquid crystal module and a third liquid crystal module. The first liquid crystal module includes a first lower substrate, a first lower electrode layer, a first pixel layer, a first upper electrode layer, a first upper substrate, and a first colored optical adhesive layer. The first lower substrate has an upper surface and a lower surface opposite to each other. The first lower electrode layer is connected to the upper surface of the first lower substrate. The first pixel layer is connected to the first lower electrode layer, so as to make the first lower electrode layer be disposed between the first pixel layer and the first lower substrate. The first upper electrode layer is connected to the first pixel layer, so as to make the first pixel layer be disposed between the first lower electrode layer and the first upper electrode layer. The first upper substrate is connected to the first upper electrode layer, so as to make the first upper electrode layer be disposed between the first pixel layer and the first upper substrate. The first colored optical adhesive layer is connected to the lower surface of the first lower substrate, so as to make the first lower substrate be disposed between the first lower electrode layer and the first colored optical adhesive layer. The second liquid crystal module is connected to the first liquid crystal module, and the second liquid crystal module includes a second lower substrate, a second lower electrode layer, a second pixel layer, a second upper electrode layer, a second upper substrate, and a second colored optical adhesive layer. The second lower substrate has an upper surface and a lower surface opposite to each other. The second lower electrode layer is connected to the upper surface of the second lower substrate. The second pixel layer is connected to the second lower electrode layer, so as to make the second lower electrode layer be disposed between the second pixel layer and the second lower substrate. The second upper electrode layer is connected to the second pixel layer, so as to make the second pixel layer be disposed between the second lower electrode layer and the second upper electrode layer. The second upper substrate is connected to the second upper electrode layer and the first colored optical adhesive layer, so as to make the second upper electrode layer be disposed between the second pixel layer and the second upper substrate, and the first colored optical adhesive layer be disposed between the first lower substrate and the second upper substrate. The second colored optical adhesive layer is connected to the lower surface of the second lower substrate, so as to make the second lower substrate be disposed between the second lower electrode layer and the second colored optical adhesive layer. The third liquid crystal module is connected to the second liquid crystal module, and the third liquid crystal module includes a third lower substrate, a third lower electrode layer, a third pixel layer, a third upper electrode layer, a third upper substrate, and a third colored optical adhesive layer. The third lower substrate has an upper surface and a lower surface opposite to each other. The third lower electrode layer is connected to the upper surface of the third lower substrate. The third pixel layer is connected to the third lower electrode layer, so as to make the third lower electrode layer be disposed between the third pixel layer and the third lower substrate. The third upper electrode layer is connected to the third pixel layer, so as to make the third pixel layer be disposed between the third lower electrode layer and the third upper electrode layer. The third upper substrate is connected to the third upper electrode layer and the second colored optical adhesive layer, so as to make the third upper electrode layer be disposed between the third pixel layer and the third upper substrate, and the second colored optical adhesive layer be disposed between the second lower substrate and the third upper substrate. The third colored optical adhesive layer is connected to the lower surface of the third lower substrate, so as to make the third lower substrate be disposed between the third lower electrode layer and the third colored optical adhesive layer. The first lower electrode layer is made of a low-reflectivity material of a dark color, the first lower electrode layer absorbs a light from outside of the first upper substrate, and prevents an interface reflection of the light between the first lower electrode layer and the first lower substrate.

According to the aforementioned display device, wherein the low-reflectivity material includes at least one of a dark copper oxide and a dark molybdenum oxide.

According to the aforementioned display device, wherein a resistance of the first lower electrode layer is 0.1 ohm to 0.5 ohm.

According to the aforementioned display device, wherein a reflectivity of the first lower electrode layer is 0% to 30%.

According to the aforementioned display device, wherein the first pixel layer, the second pixel layer, and the third pixel layer are respectively a cholesteric liquid crystal layer.

### BRIEF DESCRIPTION OF THE DRAWINGS

Fig. 1 is a cross-sectional schematic view of a display device according to the first embodiment of the present disclosure.
Fig. 2 is a top schematic view of the lower electrode layer and the wiring layers of the display device in Fig. 1.
Fig. 3 is a cross-sectional schematic view of a display device according to the second embodiment of the present disclosure.
Fig. 4 is a cross-sectional schematic view of a display device according to the third embodiment of the present disclosure.
Fig. 5 is a cross-sectional schematic view of a display device according to the fourth embodiment of the present disclosure.

### DETAILED DESCRIPTION

The present disclosure will be further exemplified by the following specific embodiments. However, the embodiments can be applied to various inventive concepts and can be embodied in various specific ranges. The specific embodiments are only for the purposes of description, and are not limited to these practical details thereof. Furthermore, in order to simplify the drawings, some conventional structures and elements will be illustrated in the drawings by a simple and schematic way. The duplicated elements may be denoted by the same number or similar numbers.

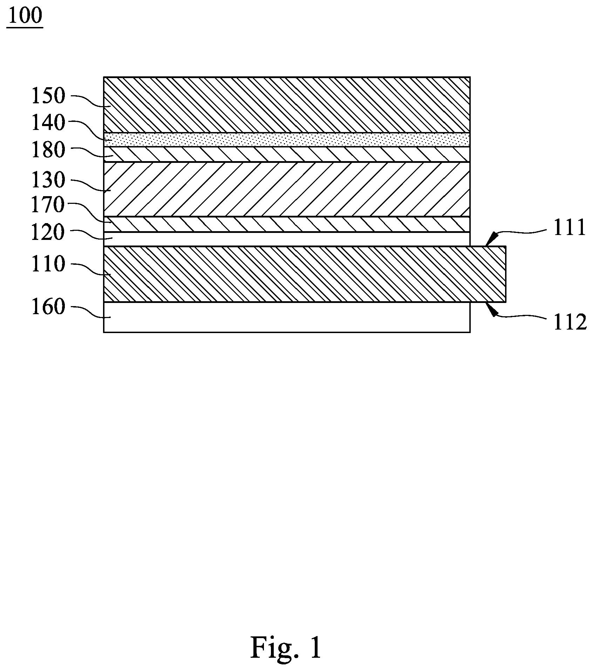

Referring to Fig. 1, Fig. 1 is a cross-sectional schematic view of a display device according to the first embodiment of the present disclosure. The display device includes at least one liquid crystal module 100. The liquid crystal module 100 includes a lower substrate 110, a lower electrode layer 120, a pixel layer 130, an upper electrode layer 140, and an upper substrate 150.

In detail, the lower substrate 110 has an upper surface 111 and a lower surface 112 opposite to each other. The lower electrode layer 120 is connected to the upper surface 111 of the lower substrate 110. The lower electrode layer 120 is made of a low-reflectivity material of a dark color, the lower electrode layer 120 is able to absorb a light from outside of the upper substrate 150, and prevent an interface reflection of the light between the lower electrode layer 120 and the lower substrate 110. Therefore, not only the conductivity of the lower electrode layer 120 can be maintained, but the absorption of external light by the liquid crystal module 100 can also be enhanced, which improves the dark-state performance and increases optical contrast of the display device.

Furthermore, the low-reflectivity material can include at least one of a dark copper oxide (CuOₓ) and a dark molybdenum oxide (MoOₓ). A resistance of the lower electrode layer 120 can be 0.1 ohm to 0.5 ohm, and a reflectivity of the lower electrode layer 120 can be 0% to 30%. Therefore, by adjusting the type or properties of the material of the lower electrode layer 120, the optical contrast performance of the display device can be further improved to meet different application requirements.

The pixel layer 130 is connected to the lower electrode layer 120, so as to make the lower electrode layer 120 be disposed between the pixel layer 130 and the lower substrate 110. The upper electrode layer 140 is connected to the pixel layer 130, so as to make the pixel layer 130 be disposed between the lower electrode layer 120 and the upper electrode layer 140. The pixel layer 130 can be a cholesteric liquid crystal layer.

The upper substrate 150 is connected to the upper electrode layer 140, so as to make the upper electrode layer 140 be disposed between the pixel layer 130 and the upper substrate 150. Therefore, the internal structure of the display device can be protected by the upper substrate 150, and the service life of the display device can be extended.

The liquid crystal module 100 can further include a colored optical adhesive layer 160 connected to the lower surface 112 of the lower substrate 110, so as to make the lower substrate 110 be disposed between the lower electrode layer 120 and the colored optical adhesive layer 160. Thus, the colored optical adhesive layer 160 can further absorb external light passing through the lower substrate 110, which is favorable for enhancing the optical contrast of the display device.

The liquid crystal module 100 can further include a lower alignment layer 170 and an upper alignment layer 180. The lower alignment layer 170 can be disposed between the lower electrode layer 120 and the pixel layer 130, and the upper alignment layer 180 can be disposed between the pixel layer 130 and the upper electrode layer 140. Therefore, by arranging the lower alignment layer 170 and the upper alignment layer 180, the alignment direction of the liquid crystals in the pixel layer 130 can be controlled, which further improves the display performance of the display device.

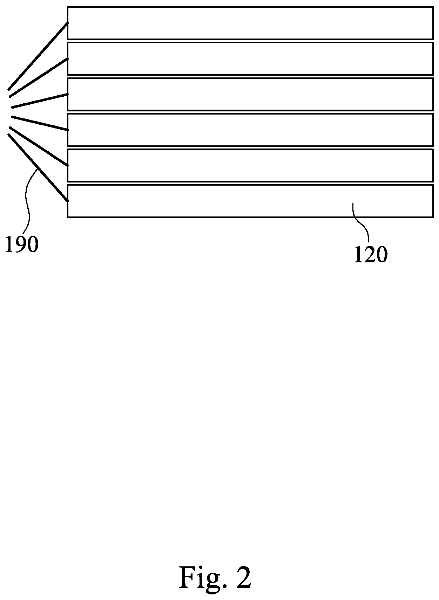

Referring to Fig. 2, Fig. 2 is a top schematic view of the lower electrode layer 120 and the wiring layers 190 of the display device in Fig. 1. The display device can further include a plurality of wiring layers 190 electrically connected to the lower electrode layer 120. The wiring layers 190 are made of the same material as the lower electrode layer 120. Because the lower electrode layer 120 and the wiring layers 190 are made of the same material, the lower electrode layer 120 and the wiring layers 190 can be fabricated through a single fan-out process, which reduces the complexity of the manufacturing process.

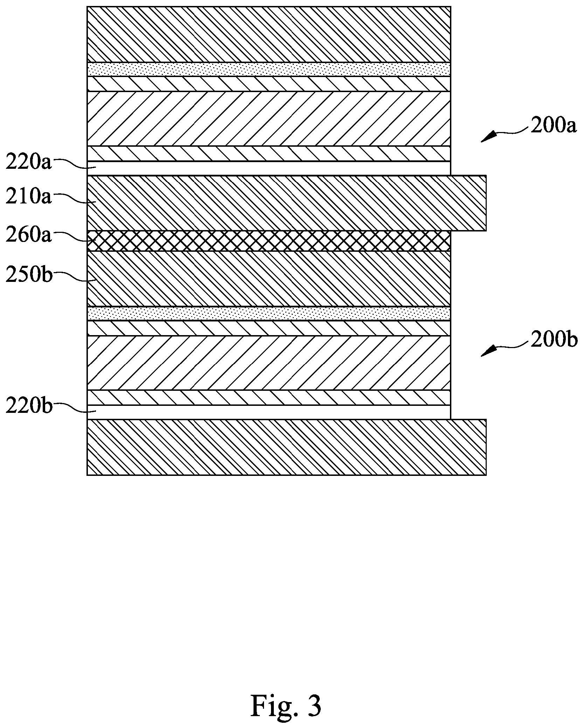

Referring to Fig. 3, Fig. 3 is a cross-sectional schematic view of a display device according to the second embodiment of the present disclosure. In the display device of Fig. 3, the number of liquid crystal modules can be two, and the lower substrate of one of the liquid crystal modules can be connected to the upper substrate of the other one of the liquid crystal modules, so as to make the liquid crystal modules be stacked together.

In detail, in the second embodiment, the display device can include a liquid crystal module 200a and a liquid crystal module 200b. The layer structures of the liquid crystal module 200a and the liquid crystal module 200b are the same or similar to the layer structure of the aforementioned liquid crystal module 100, and the same structures will not be described again herein. The lower substrate 210a of the liquid crystal module 200a is connected to the upper substrate 250b of the liquid crystal module 200b, so as to obtain a stacked structure of the liquid crystal module 200a and the liquid crystal module 200b. It should be mentioned that, in the second embodiment, only the lower electrode layer 220b of the liquid crystal module 200b is made of a low-reflectivity material of a dark color, and the lower electrode layer 220a of the liquid crystal module 200a can remain transparent or partially transparent to avoid blocking light from entering the liquid crystal module 200b through the liquid crystal module 200a.

Moreover, the one of the liquid crystal modules can further include a colored optical adhesive layer disposed between the lower substrate of the one of the liquid crystal modules and the upper substrate of the other one of the liquid crystal modules. In the second embodiment, the liquid crystal module 200a includes a colored optical adhesive layer 260a. The colored optical adhesive layer 260a is disposed between the lower substrate 210a of the liquid crystal module 200a and the upper substrate 250b of the liquid crystal module 200b. Therefore, the colored optical adhesive layer 260a can absorb external light passing through the lower substrate 210a of the liquid crystal module 200a, which reduces the impact of external light on the color performance of the liquid crystal module 200b.

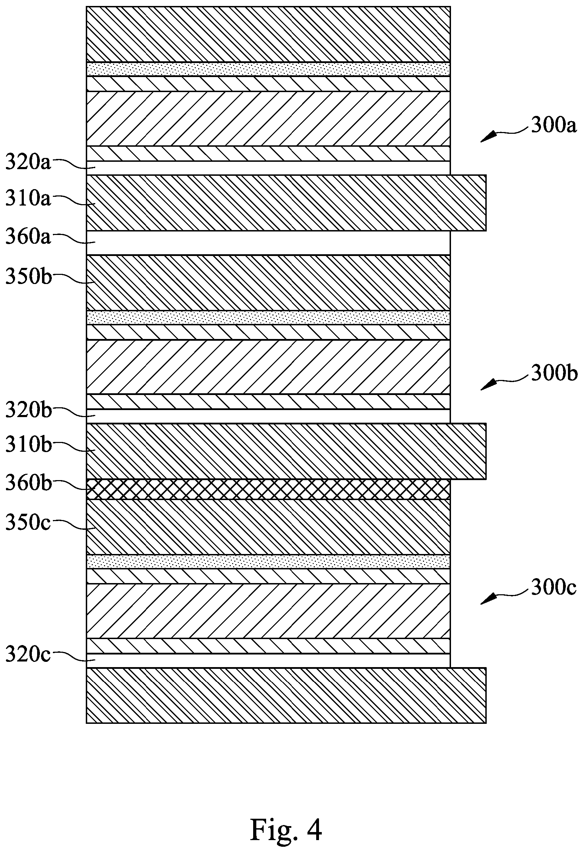

Referring to Fig. 4, Fig. 4 is a cross-sectional schematic view of a display device according to the third embodiment of the present disclosure. In the display device of Fig. 4, the number of liquid crystal modules can be three. The lower substrate of one of the liquid crystal modules can be connected to the upper substrate of another one of the liquid crystal modules, and the lower substrate of the another one of the liquid crystal modules can be connected to the upper substrate of the other one of the liquid crystal modules, so as to make the liquid crystal modules be stacked together.

In detail, in the third embodiment, the display device can include a liquid crystal module 300a, a liquid crystal module 300b, and a liquid crystal module 300c. The layer structures of the liquid crystal module 300a, the liquid crystal module 300b, and the liquid crystal module 300c are the same or similar to the layer structure of the aforementioned liquid crystal module 100, and the same structures will not be described again herein. The lower substrate 310a of the liquid crystal module 300a is connected to the upper substrate 350b of the liquid crystal module 300b, and the lower substrate 310b of the liquid crystal module 300b is connected to the upper substrate 350c of the liquid crystal module 300c, so as to obtain a stacked structure of the liquid crystal module 300a, the liquid crystal module 300b, and the liquid crystal module 300c. It should be mentioned that, in the third embodiment, only the lower electrode layer 320c of the liquid crystal module 300c is made of a low-reflectivity material of a dark color, and the lower electrode layer 320a and the lower electrode layer 320b of the liquid crystal module 300a and the liquid crystal module 300b can remain transparent or partially transparent to avoid blocking light from entering the liquid crystal module 300c through the liquid crystal module 300a and the liquid crystal module 300b.

Furthermore, the one of the liquid crystal modules can include a colored optical adhesive layer disposed between the lower substrate of the one of the liquid crystal modules and the upper substrate of the another one of the liquid crystal modules. Also, the another one of the liquid crystal modules can further include a colored optical adhesive layer disposed between the lower substrate of the another one of the liquid crystal modules and the upper substrate of the other one of the liquid crystal modules. In the third embodiment, the liquid crystal module 300a includes a colored optical adhesive layer 360a disposed between the lower substrate 310a of the liquid crystal module 300a and the upper substrate 350b of the liquid crystal module 300b. The liquid crystal module 300b includes a colored optical adhesive layer 360b disposed between the lower substrate 310b of the liquid crystal module 300b and the upper substrate 350c of the liquid crystal module 300c. Therefore, both the colored optical adhesive layer 360a and the colored optical adhesive layer 360b can absorb external light, which improves the color performance of the display device.

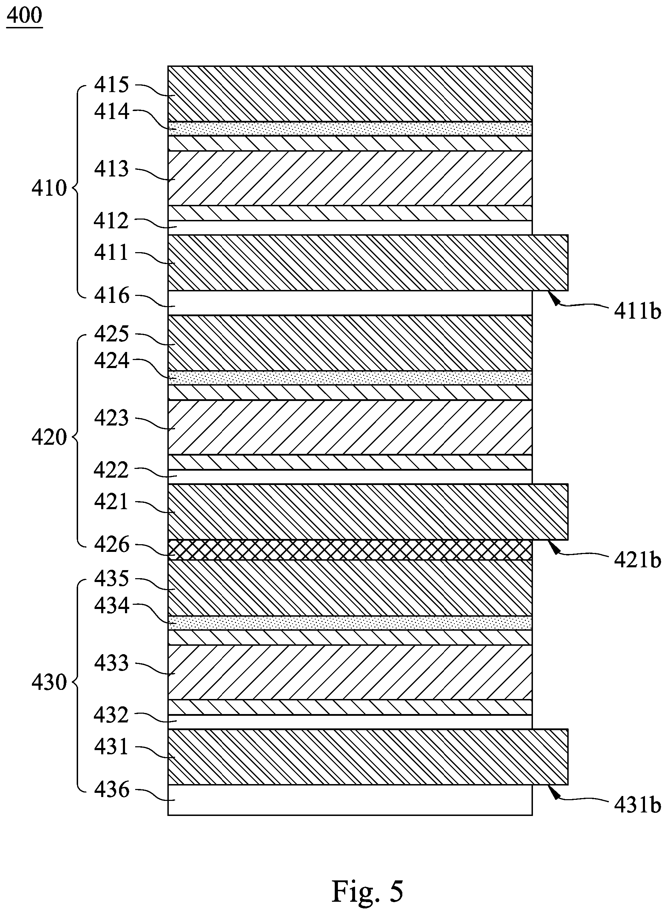

Referring to Fig. 5, Fig. 5 is a cross-sectional schematic view of a display device 400 according to the fourth embodiment of the present disclosure. The display device 400 includes a first liquid crystal module 410, a second liquid crystal module 420, and a third liquid crystal module 430.

The first liquid crystal module 410 includes a first lower substrate 411, a first lower electrode layer 412, a first pixel layer 413, a first upper electrode layer 414, a first upper substrate 415, and a first colored optical adhesive layer 416. The second liquid crystal module 420 is connected to the first liquid crystal module 410. The second liquid crystal module 420 includes a second lower substrate 421, a second lower electrode layer 422, a second pixel layer 423, a second upper electrode layer 424, a second upper substrate 425, and a second colored optical adhesive layer 426. The third liquid crystal module 430 is connected to the second liquid crystal module 420. The third liquid crystal module 430 includes a third lower substrate 431, a third lower electrode layer 432, a third pixel layer 433, a third upper electrode layer 434, a third upper substrate 435, and a third colored optical adhesive layer 436.

It should be mentioned that, the arrangements of the first lower substrate 411, the first lower electrode layer 412, the first pixel layer 413, the first upper electrode layer 414, the first upper substrate 415 of the first liquid crystal module 410, the second lower substrate 421, the second lower electrode layer 422, the second pixel layer 423, the second upper electrode layer 424, the second upper substrate 425 of the second liquid crystal module 420, and the third lower substrate 431, the third lower electrode layer 432, the third pixel layer 433, the third upper electrode layer 434, the third upper substrate 435 of the third liquid crystal module 430 are the same or similar to the arrangement of the lower substrate 110, the lower electrode layer 120, the pixel layer 130, the upper electrode layer 140, the upper substrate 150 of the aforementioned liquid crystal module 100 described above, and the details will not be given again herein.

The first colored optical adhesive layer 416 of the first liquid crystal module 410 is connected to the lower surface 411b of the first lower substrate 411, so as to make the first lower substrate 411 be disposed between the first lower electrode layer 412 and the first colored optical adhesive layer 416. The second upper substrate 425 of the second liquid crystal module 420 is connected to the first colored optical adhesive layer 416, so as to make the first colored optical adhesive layer 416 be disposed between the first lower substrate 411 and the second upper substrate 425. The second colored optical adhesive layer 426 is connected to the lower surface 421b of the second lower substrate 421, so as to make the second lower substrate 421 be disposed between the second lower electrode layer 422 and the second colored optical adhesive layer 426. The third upper substrate 435 of the third liquid crystal module 430 is connected to the second colored optical adhesive layer 426, so as to make the second colored optical adhesive layer 426 be disposed between the second lower substrate 421 and the third upper substrate 435. The third colored optical adhesive layer 436 is connected to the lower surface 431b of the third lower substrate 431, so as to make the third lower substrate 431 be disposed between the third lower electrode layer 432 and the third colored optical adhesive layer 436. Furthermore, the first lower electrode layer 412 is made of a low-reflectivity material of a dark color, the first lower electrode layer 412 absorbs the light from outside of the first upper substrate 415, and prevents the interface reflection of the light between the first lower electrode layer 412 and the first lower substrate 411. Therefore, the first lower electrode layer 412, the first colored optical adhesive layer 416, the second colored optical adhesive layer 426, and the third colored optical adhesive layer 436 can absorb external light, which reduces the influence of external light on the color performance and improves optical contrast of the display device 400.

In summary, by adjusting the type or properties of the material of the lower electrode layer of the display device of the present disclosure, not only the conductivity of the lower electrode layer can be maintained, but the absorption of external light by the liquid crystal module can also be enhanced, which improves the dark-state performance and increases optical contrast of the display device.

## Claims

1. A display device, **characterized in** comprising:
at least one liquid crystal module (100), comprising:
a lower substrate (110) having an upper surface (111) and a lower surface (112) opposite to each other;
a lower electrode layer (120) connected to the upper surface (111) of the lower substrate (110);
a pixel layer (130) connected to the lower electrode layer (120), so as to make the lower electrode layer (120) be disposed between the pixel layer (130) and the lower substrate (110);
an upper electrode layer (140) connected to the pixel layer (130), so as to make the pixel layer (130) be disposed between the lower electrode layer (120) and the upper electrode layer (140); and
an upper substrate (150) connected to the upper electrode layer (140), so as to make the upper electrode layer (140) be disposed between the pixel layer (130) and the upper substrate (150);
wherein the lower electrode layer (120) is made of a low-reflectivity material of a dark color, the lower electrode layer (120) absorbs a light from outside of the upper substrate (150), and prevents an interface reflection of the light between the lower electrode layer (120) and the lower substrate (110).

2. The display device of claim 1, wherein the low-reflectivity material comprises at least one of a dark copper oxide and a dark molybdenum oxide.

3. The display device of claim 1 or claim 2, wherein a resistance of the lower electrode layer (120) is 0.1 ohm to 0.5 ohm.

4. The display device of any one of claim 1 to claim 3, wherein a reflectivity of the lower electrode layer (120) is 0% to 30%.

5. The display device of any one of claim 1 to claim 4, wherein the at least one liquid crystal module (100) further comprises a colored optical adhesive layer (160) connected to the lower surface (112) of the lower substrate (110), so as to make the lower substrate (110) be disposed between the lower electrode layer (120) and the colored optical adhesive layer (160).

6. The display device of any one of claim 1 to claim 5, wherein the at least one liquid crystal module (100) further comprises:
a lower alignment layer (170) disposed between the lower electrode layer (120) and the pixel layer (130); and
an upper alignment layer (180) disposed between the pixel layer (130) and the upper electrode layer (140).

7. The display device of any one of claim 1 to claim 6, wherein the pixel layer (130) is a cholesteric liquid crystal layer.

8. The display device of any one of claim 1 to claim 7, further comprising a plurality of wiring layers (190) electrically connected to the lower electrode layer (120), wherein the plurality of wiring layers (190) are made of the same material as the lower electrode layer (120).

9. A display device (400), **characterized in** comprising:
a first liquid crystal module (410), comprising:
a first lower substrate (411) having an upper surface and a lower surface (411b) opposite to each other;
a first lower electrode layer (412) connected to the upper surface of the first lower substrate (411);
a first pixel layer (413) connected to the first lower electrode layer (412), so as to make the first lower electrode layer (412) be disposed between the first pixel layer (413) and the first lower substrate (411);
a first upper electrode layer (414) connected to the first pixel layer (413), so as to make the first pixel layer (413) be disposed between the first lower electrode layer (412) and the first upper electrode layer (414);
a first upper substrate (415) connected to the first upper electrode layer (414), so as to make the first upper electrode layer (414) be disposed between the first pixel layer (413) and the first upper substrate (415); and
a first colored optical adhesive layer (416) connected to the lower surface (411b) of the first lower substrate (411), so as to make the first lower substrate (411) be disposed between the first lower electrode layer (412) and the first colored optical adhesive layer (416);
a second liquid crystal module (420) connected to the first liquid crystal module (410), wherein the second liquid crystal module (420) comprises:
a second lower substrate (421) having an upper surface and a lower surface (421b) opposite to each other;
a second lower electrode layer (422) connected to the upper surface of the second lower substrate (421);
a second pixel layer (423) connected to the second lower electrode layer (422), so as to make the second lower electrode layer (422) be disposed between the second pixel layer (423) and the second lower substrate (421);
a second upper electrode layer (414) connected to the second pixel layer (423), so as to make the second pixel layer (423) be disposed between the second lower electrode layer (422) and the second upper electrode layer (414);
a second upper substrate (425) connected to the second upper electrode layer (414) and the first colored optical adhesive layer (416), so as to make the second upper electrode layer (414) be disposed between the second pixel layer (423) and the second upper substrate (425), and the first colored optical adhesive layer (416) be disposed between the first lower substrate (411) and the second upper substrate (425); and
a second colored optical adhesive layer (426) connected to the lower surface (421b) of the second lower substrate (421), so as to make the second lower substrate (421) be disposed between the second lower electrode layer (422) and the second colored optical adhesive layer (426); and
a third liquid crystal module (430) connected to the second liquid crystal module (420), wherein the third liquid crystal module (430) comprises:
a third lower substrate (431) having an upper surface and a lower surface (431b) opposite to each other;
a third lower electrode layer (432) connected to the upper surface of the third lower substrate (431);
a third pixel layer (433) connected to the third lower electrode layer (432), so as to make the third lower electrode layer (432) be disposed between the third pixel layer (433) and the third lower substrate (431);
a third upper electrode layer (434) connected to the third pixel layer (433), so as to make the third pixel layer (433) be disposed between the third lower electrode layer (432) and the third upper electrode layer (434);
a third upper substrate (435) connected to the third upper electrode layer (434) and the second colored optical adhesive layer (426), so as to make the third upper electrode layer (434) be disposed between the third pixel layer (433) and the third upper substrate (435), and the second colored optical adhesive layer (426) be disposed between the second lower substrate (421) and the third upper substrate (435); and
a third colored optical adhesive layer (436) connected to the lower surface (431b) of the third lower substrate (431), so as to make the third lower substrate (431) be disposed between the third lower electrode layer (432) and the third colored optical adhesive layer (436);
wherein the first lower electrode layer (412) is made of a low-reflectivity material of a dark color, the first lower electrode layer (412) absorbs a light from outside of the first upper substrate (415), and prevents an interface reflection of the light between the first lower electrode layer (412) and the first lower substrate (411).

10. The display device (400) of claim 9, wherein the low-reflectivity material comprises at least one of a dark copper oxide and a dark molybdenum oxide.

11. The display device (400) of claim 9 or claim 10, wherein a resistance of the first lower electrode layer (412) is 0.1 ohm to 0.5 ohm.

12. The display device (400) of any one of claim 9 to claim 11, wherein a reflectivity of the first lower electrode layer (412) is 0% to 30%.

13. The display device (400) of any one of claim 9 to claim 12, wherein the first pixel layer (413), the second pixel layer (423), and the third pixel layer (433) are respectively a cholesteric liquid crystal layer.
